(19) Europäisches Patentamt / European Patent Office / Office européen des brevets

(11) **EP 1 315 346 B1**

(12) **FASCICULE DE BREVET EUROPEEN**

(45) Date de publication et mention
de la délivrance du brevet:
**14.10.2009 Bulletin 2009/42**

(51) Int Cl.:
**H04L 25/02** *(2006.01)*

(21) Numéro de dépôt: **02292905.3**

(22) Date de dépôt: **22.11.2002**

(54) **Procédé et dispositif d'égalisation par blocs avec interpolation améliorée**

Verfahren und Vorrichtung für Blockentzerrung mit verbesserter Interpolation

Method and apparatus for block equalization with improved interpolation

(84) Etats contractants désignés:
**AT BE BG CH CY CZ DE DK EE ES FI FR GB GR IE IT LI LU MC NL PT SE SK TR**

(30) Priorité: **23.11.2001 FR 0115190**

(43) Date de publication de la demande:
**28.05.2003 Bulletin 2003/22**

(73) Titulaire: **Thales**
**92200 Neuilly Sur Seine (FR)**

(72) Inventeur: **Laurent, Pierre André**
**94117 Arcueil Cédex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 996 247      EP-A- 1 032 169**
**WO-A-00/30274      WO-A-01/31867**

## Description

La présente invention concerne un procédé et un égaliseur adaptés notamment à des modems de type série.

Certains documents de normalisation internationale de procédés de transmission appelés STANAG (Standardization NATO Agreement en anglo-saxon) décrivent des formes d'ondes à utiliser pour des modems (modulateurs/démodulateurs) et destinées à être transmises sur des canaux étroits (3KHz en général) et de type série. Les symboles sont transmis séquentiellement à une vitesse de modulation généralement constante de 2400 bauds.

Le canal de transmission utilisé (gamme des Hautes Fréquences HF de 3 à 30 MHz) étant particulièrement perturbé et sa fonction de transfert évoluant relativement rapidement, toutes ces formes d'onde comportent à intervalles réguliers des signaux connus qui servent de références à partir desquelles la fonction de transfert du canal est déduite. Parmi les différents formats standardisés retenus, certains concernent des modems à haut débit, typiquement de 3200 à 9600 bits/s qui sont sensibles aux erreurs d'estimation du canal.

Pour obtenir un haut débit, il est indispensable, en plus d'utiliser une modulation complexe de type QAM (Quadrature Amplitude Modulation) à nombreux états, de limiter au maximum la proportion de signaux de référence afin de maximiser le débit utile. En d'autres termes, la communication comportera des blocs de données de taille relativement grande entre lesquels seront insérés des signaux de référence de petite taille.

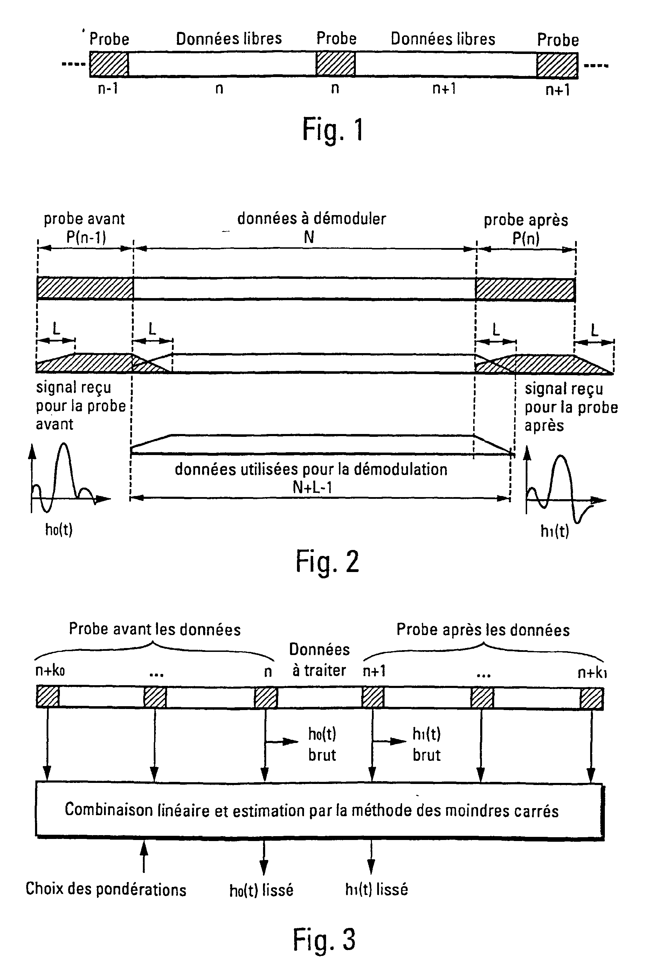

La figure 1 représente un exemple de structure d'un signal décrit dans le STANAG 4539 où l'on trouve en alternance, des blocs de 256 symboles de données avec insertion de blocs de 31 symboles connus (appelés « probe » ou référence), ce qui correspond à environ 11 % du total.

Pour évaluer la réponse impulsionnelle h(t) du canal au niveau du $n^{\text{ième}}$ bloc de données, on dispose d'une première probe (n-1) disposée avant le bloc de données et d'une deuxième probe (n) disposée après le bloc de données qui permettent d'évaluer la fonction de transfert du canal au travers de la réponse impulsionnelle combinée obtenue par la convolution de :

- la réponse impulsionnelle de l'émetteur, fixe,
- la réponse impulsionnelle du canal, éminemment variable,
- la réponse impulsionnelle du récepteur, fixe,
  ces trois éléments entrant en jeu pour définir le signal reçu à chaque instant.

Dans la suite de la description et pour simplifier, on supposera que cet ensemble forme la réponse impulsionnelle du canal.

Le DFE (Decision Feedback Equalizer en anglo-saxon) est couramment utilisé dans des modems correspondant par exemple à des STANAG (tels que le 4285) où la proportion des signaux de référence est relativement élevée et les blocs de données relativement courts (par exemple 32 symboles dans le 4285).

Une autre manière de procéder selon l'art antérieur est d'utiliser un algorithme dit « BDFE » (Block Decision Feedback Equalizer) qui revient à estimer la réponse impulsionnelle du canal avant et après un bloc de données et à trouver les valeurs de symboles émis (données émises) les plus vraisemblables qui minimiseront l'erreur quadratique moyenne entre le signal reçu et son estimation à partir d'une réponse impulsionnelle locale supposée connue.

Cet algorithme représenté à la figure 2 consiste notamment à exécuter les étapes suivantes :

a) estimer la réponse impulsionnelle h(t) de longueur L symboles, connaissant cette réponse impulsionnelle estimée,
b) éliminer au début du bloc de données n comportant N symboles utiles, l'influence des symboles de la probe (n-1) placée devant (L-1 premiers symboles),
c) supprimer de la probe (n) placée après le bloc des données, la participation des symboles de la probe qui sont perturbés par l'influence des derniers symboles de données (L-1 symboles),
d) à partir des échantillons ainsi obtenus, dont le nombre est un peu plus grand que le nombre de symboles de données (à savoir N+L-1), estimer au mieux la valeur des N symboles utiles les plus probablement émis.

L'étape b) peut considérer que la réponse impulsionnelle du canal vaut $h_0(t)$ dans la probe avant le bloc de données, Probe n-1, et l'étape c) que cette réponse vaut $h_1(t)$ dans la probe Probe n après le bloc de données.

L'étape d) consiste par exemple à supposer que la réponse impulsionnelle du canal évolue linéairement entre $h_0(t)$ et $h_1(t)$ tout au long du bloc de données.

La demande de brevet WO 00 30274 décrit un procédé dans lequel la réponse impulsionnelle du canal est estimée à partir d'informations issus du passé. Ainsi, l'enseignement technique de ce document réalise une prédiction à partir du passé.

Le procédé selon l'invention consiste notamment à s'adapter à la vitesse d'évolution du canal et avoir ainsi à tout instant un niveau de performances «optimal» tout en n'augmentant la puissance de calcul nécessaire que de façon négligeable.

La description fera appel à certaines notations adoptées dont les suivantes :

- $e_n$ : échantillons complexes émis, espacés d'un symbole, et appartenant à l'une des constellations mentionnées plus haut (connus ou inconnus)
- $r_n$ : échantillons complexes reçus (les valeurs de n seront explicitées à chaque fois, ces échantillons pouvant appartenir à une probe ou à des données)
- L : longueur de la réponse impulsionnelle (en symboles) du canal à estimer
- P : nombre de symboles d'une "probe"
- N : nombre de symboles d'un bloc de données
- $d^k_{0...P-1}$ : valeurs complexes connues des symboles de la probe précédant le bloc de données de rang n + k, étant entendu que le bloc courant a le rang n.

L'invention concerne un procédé d'égalisation d'un signal reçu dans un récepteur après traversée d'un canal de transmission, ledit signal comportant au moins un bloc de données et plusieurs probes situés de part et d'autre du bloc de données. Il est **caractérisé en ce qu'**il comporte au moins une étape où la réponse impulsionnelle du canal est estimée avant et après un bloc de données n en tenant compte des probes (Probe n-1 et Probe n) situés de part et d'autre du bloc de données n et aussi des probes précédentes et suivantes des Probes n-1 et Probe n, lesdites probes étant pondérées et combinées entre elles, pour chaque probe disposée avant le bloc de données et pour chaque probe disposée après le bloc de données, estimer la réponse impulsionnelle du canal respectivement $h_0(t)$ et $h_1(t)$, avant et après un bloc de données n à traiter en considérant les probes situées de part et d'autre du bloc de données n, mais aussi les probes précédentes et suivantes, à savoir $h_{k0}(t)$ $h_{k0+1}(t)$ ... $h_0(t)$ $h_1(t)$ ... $h_{k1-1}(t)$ $h_{k1}(t)$, avec $k_0$ inférieur ou égal à 0 et $k_1$ supérieur ou égal à 1, combinées chacun avec un jeu de poids notés respectivement $a_{0...k1-k0}$ (pour obtenir $h_0(t)$) et $b_{0...k1-k0}$ (pour obtenir $h_1(t)$).

Le procédé comporte par exemple au moins les étapes suivantes : pour chaque probe disposée avant le bloc de données à traiter et pour chaque probe située après le bloc de données à traiter, on remplace chacune des probes par des probes lissées et on détermine ensuite une estimée de la réponse impulsionnelle $h_0$ avant le bloc de données et une estimée de la réponse impulsionnelle $h_1$ après le bloc de données.

L'estimation peut être effectuée en minimisant l'erreur quadratique totale donnée par

$$E = \sum_{n=N_0}^{N_1} \left| \sum_{m=0}^{L-1} d_{n-m} h_m - r_n \right|^2$$

avec
$d_{n-m}$ = signal émis connu
$h_m$ = échantillon de la réponse impulsionnelle
$_m$ = signal reçu

Le procédé comporte par exemple une étape où les coefficients utilisés pour le lissage des probes sont obtenus en minimisant l'erreur quadratique de l'erreur d'interpolation

$$E(\theta) = \left| \sum_{i=0}^{M-1} a_i e^{j \theta (k_0 + i)} - e^{j x \theta} \right|^2$$

où θ est la rotation de phase, comprise entre deux valeurs extrêmes -A et +A qui dépendent de la vitesse de variation de la fonction de transfert du canal.

Le procédé utilise par exemple plusieurs jeux de coefficients d'interpolation, chaque jeu étant optimisé pour des conditions de réception bien précises (définies par un rapport signal/bruit de fonctionnement et un étalement Doppler du canal) où l'on essaie, à intervalles réguliers, des jeux voisins de celui en cours d'utilisation et où l'on retient pour la suite celui qui maximise un rapport signal/bruit de démodulation pouvant être estimé de diverses façons.

Le procédé est par exemple utilisé pour la démodulation de signaux reçus dans un BDFE.

L'invention concerne aussi un dispositif permettant d'égaliser un signal reçu après traversée d'un canal de transmission, ledit signal comportant au moins un bloc de données et plusieurs probes situés de part et d'autre du bloc de données. Il est caractérisé en ce qu'il comporte au moins un moyen adapté à estimer pour chaque probe disposée avant le bloc de données et pour chaque probe disposée après le bloc de données, la réponse impulsionnelle du canal respectivement $h_0(t)$ et $h_1(t)$, avant et après un bloc de données n à traiter en considérant les probes situées de part et d'autre du bloc de données n, mais aussi les probes précédentes et suivantes, à savoir $h_{k0}(t)$ $h_{k0+1}(t)$ ... $h_0(t)$ $h_1(t)$ ... $h_{k1-1}(t)$ $h_{k1}(t)$, avec $k_0$ inférieur ou égal à 0 et $k_1$ supérieur ou égal à 1, combinées chacun avec un jeu de poids notés respectivement $a_{0..k1-k0}$ (pour obtenir $h_0(t)$) et $b_{0...k1-k0}$ (pour obtenir $h_1(t)$), lesdites probes étant pondérées et combinées entre elles et au moins un dispositif de type BDFE.

L'invention présente notamment les avantages suivants :

Le procédé permet de s'adapter à la vitesse d'évolution du canal et d'avoir ainsi à tout instant un niveau de performances « optimal » tout en n'augmentant que de façon négligeable la puissance de calcul requise.

La présente invention sera mieux comprise à la lecture de la description qui suit d'un exemple de réalisation donné à titre illustratif et nullement limitatif en référence aux figures qui représentent :

- la figure 1 un exemple général de la structure des données de transmission à travers un canal de transmission,
- la figure 2 les étapes de l'algorithme BDFE utilisé selon l'art antérieur,
- la figure 3 un synoptique des différentes étapes du procédé selon l'invention,
- la figure 4 une première variante de mise en oeuvre de l'invention,
- la figure 5 une deuxième variante d'exécution du procédé selon l'invention,
- la figure 6 une représentation graphique des valeurs de coefficients d'un filtre,
- la figure 7 un exemple d'interpolation tenant compte des effets de bord, et
- la figure 8 un synoptique d'un exemple de dispositif selon l'invention.

L'idée mise en oeuvre dans le procédé selon l'invention consiste notamment à estimer les réponses impulsionnelles du canal de transmission d'un signal avant et après le bloc de données à traiter, au moyen d'une opération de lissage ou de filtrage ou encore d'interpolation.

Le signal reçu par un récepteur est transmis tout d'abord à un estimateur ayant notamment pour fonction d'estimer la réponse impulsionnelle du canal respectivement $h_0(t)$ et $h_1(t)$, avant et après un bloc de données n à traiter en considérant les probes situées de part et d'autre du bloc de données n, mais aussi les probes précédentes et suivantes, à savoir $h_{k0}(t)$ $h_{k0+1}(t)$ ... $h_0(t)$ $h_1(t)$ ... $h_{k1-1}(t)$ $h_{k1}(t)$, avec $k_0$ inférieur ou égal à 0 et $k_1$ superieur ou égal à 1, combinées chacun avec un jeu de poids notés respectivement $a_{0...k1-k0}$ (pour obtenir $h_0(t)$) et $b_{0...k1-k0}$ (pour obtenir $h_1(t)$). Il s'agit en fait d'une fonction de filtrage (ou lissage ou interpolation) qui a notamment pour effet de diminuer le niveau de bruit.

Ensuite, en disposant de plusieurs jeux de coefficients $a_i$ et $b_i$ le procédé permet de choisir, à chaque instant, le coefficient qui donne les meilleurs résultats, ce qui permet une adaptation à la vitesse de variation du canal.

La figure 3 schématise sous forme de schéma bloc les différentes étapes mises en oeuvre par le procédé selon l'invention, où les variantes lissées (améliorées) des réponses impulsionnelles $h_0$ et $h_1$ sont obtenues par combinaison linéaire puis estimation par la méthode des moindres carrés. Le choix des coefficients de pondération est détaillé dans la suite de la description.

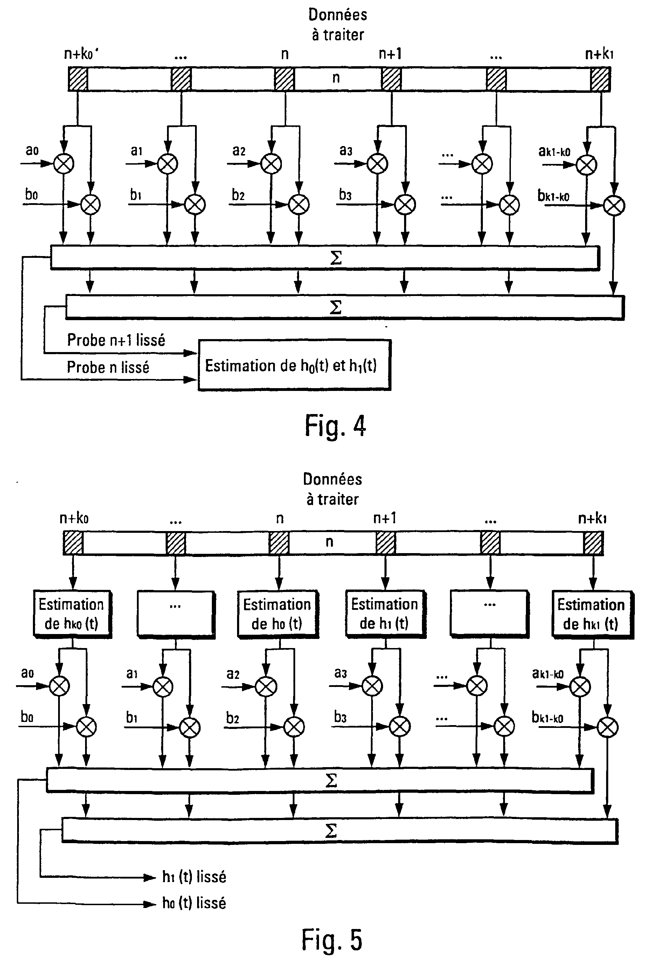

La figure 4 représente une première variante de mise en oeuvre du procédé selon l'invention.

Le procédé comporte entre autre les deux étapes suivantes :

1. le filtrage des signaux temporels des probes pour générer deux probes fictives aux positions n et n+1 (Probe n-1 juste avant et Probe n juste après le bloc de données n à démoduler),
2. l'utilisation de ces deux probes fictives pour calculer $h_0$ puis $h_1$ ou bien pour les calculer toutes deux par un algorithme d'estimation conjointe qui suppose que ces réponses impulsionnelles ne sont pas complètement indépendantes.

**1 - Filtrage**

La probe de rang n + p (p = $k_0$...$k_1$) est constituée des P échantillons notés $r_{n+p, 0...P-1}$.

L'étape de filtrage consiste par exemple à remplacer les P échantillons de la probe $r_0$ avant le bloc de données, à savoir $r_{0, 0...P-1}$, par des échantillons modifiés $r'_{0, 0...P-1}$ donnés par la relation simple :

$$r'_{0, i} = \sum_{k = k_0}^{k = k_1} a_{k - k_0} \, r_{k, i} = \sum_{m = 0}^{m = k_1 - k_0} a_m \, r_{m + k_0, i}$$

$$i = 0...P - 1 \qquad (1)$$

puis à remplacer les P échantillons de la probe $r_1$ après le bloc de données, à savoir $r_{1,\,0...P-1}$, par des échantillons modifiés $r'_{1,\,0...P-1}$ donnés par une relation similaire

$$r'_{1,i} = \sum_{k=k_0}^{k=k_1} b_{k-k_0} \, r_{k,i} = \sum_{m=0}^{m=k_1-k_0} b_m \, r_{m+k_0,i}$$
$$i = 0...P-1 \qquad (2)$$

Les coefficients $a_i$ et $b_i$ sont par exemple optimisés pour les valeurs courantes de $k_0$ et $k_i$, pour un rapport signal/bruit donné, et pour une vitesse de variation donnée (« étalement Doppler ») de la fonction de transfert du canal.

Si, dans une forme d'onde particulière, les probes sont affectées d'une rotation de phase individuelle non nulle et connue, les échantillons $r_{n+p,\,0...P-1}$ subissent la rotation inverse AVANT leur combinaison, et, si nécessaire, les échantillons corrigés r' subissent la rotation directe APRES leur calcul.

Un exemple de calcul des coefficients $a_i$ et $b_i$ est explicité plus loin dans la description.

## 2 - **Estimation**

L'estimation des réponses impulsionnelles se fait par exemple selon la méthode des moindres carrés. A titre d'exemple non limitatif dans la suite de la description, on rappelle une des méthodes les plus simples à mettre en oeuvre.

On cherche la meilleure estimation des L échantillons de la réponse impulsionnelle h du canal notés $h_{0...L-1}$ (comme la méthode est la même pour $h_0$ et $h_1$, on omet l'indice de h).

Le signal émis connu est $d_0...d_{P-1}$ et le signal à traiter est noté $r_0...r_{P-1}$ (c'est-à-dire $r'_{0,0...P-1}$ et $r'_{1,0...P-1}$)

On estime la réponse impulsionnelle du canal h en minimisant l'erreur quadratique totale donnée par :

$$E = \sum_{n=N_0}^{N_1} \left| \sum_{m=0}^{L-1} d_{n-m} h_m - r_n \right|^2 \qquad (3)$$

Pour que seuls les symboles connus interviennent (i.e. $d_0$ à $d_{P-1}$ seulement), le procédé considère $N_0 = L - 1$ et $N_1 = P - 1$, ce qui a en particulier pour conséquence de calculer, lors de l'opération précédente de filtrage, uniquement les P - L (au lieu de L) valeurs corrigées r'.

La minimisation de E conduit aux L équations suivantes :

$$\sum_{n=L-1}^{P-1} d^*_{n-p} \left( \sum_{m=0}^{L-1} d_{n-m} h_m - r_n \right) = 0$$
$$p = 0...L - 1 \qquad (4)$$

que l'on peut réécrire :

$$\sum_{m=0}^{L-1} h_m \left( \sum_{n=L-1}^{P-1} d_{n-m} d^*_{n-p} \right) = \sum_{n=L-1}^{P-1} r_n d^*_{n-p}$$
$$p = 0...L - 1 \qquad (5)$$

ou encore :

$$\sum_{m=0}^{L-1} A_{p,m}\, h_m = B_p$$
$$p = 0...L-1 \qquad\qquad (6)$$

avec

$$A_{p,m} = \sum_{n=L-1}^{P-1} d_{n-m}\, d_{n-p}^{*} = A_{m,p}^{*}$$
$$m = 0...L-1$$
$$p = 0...L-1$$

et

$$B_p = \sum_{n=L-1}^{P-1} r_n\, d_{n-p}^{*}$$
$$p = 0...L-1$$

La matrice $A = \{A_{p,m}\}$ étant hermitienne, la solution du problème est rapidement trouvée en utilisant par exemple la décomposition L-U de Cholesky, bien connue de l'homme de l'art, où $A = L\,U$ et

■ L est une matrice triangulaire inférieure n'ayant que des 1 sur la diagonale,
■ U est une matrice triangulaire supérieure où les éléments de la diagonale sont réels.

En pratique, les matrices L et U sont précalculées (en mémoire morte par exemple) puisque la matrice A est formée à partir de valeurs constantes.
Formellement, on peut écrire que l'on doit avoir $A\,h = B$ ou $L\,U\,h = B$, ce qui est résolu en faisant intervenir un vecteur intermédiaire y, et en résolvant d'abord $L\,y = B$ puis $U\,h = y$ (7).
Cette variante d'exécution du procédé est bien adaptée lorsque les séquences émises pour toutes les probes sont identiques, à une rotation de phase connue près.
La figure 5 schématise les étapes d'une deuxième variante de mise en oeuvre du procédé qui exécute les étapes 1 et 2 précitées dans l'ordre inverse à savoir :

- L'estimation directe des réponses impulsionnelles aux positions $n+k_0$, $n + k_0 + 1$, ..., n, n+1, ..., $n+k_1$
- Le lissage de ces réponses impulsionnelles pour obtenir $h_0$ puis $h_1$.

Cette deuxième variante est particulièrement bien adaptée lorsque les données (connues) véhiculées par les probes peuvent varier d'une probe à l'autre, et ne se déduisent pas les unes des autres par une simple rotation de phase.

**1 - Estimation**

Le procédé commence par estimer les $k_1 - k_0 + 1$ réponses impulsionnelles pour toutes les probes disponibles. L'algorithme à utiliser est identique à celui qui a été exposé pour la variante 1. Il fournit les réponses impulsionnelles $h_{k,\,0...L-1}$ où k est compris entre $k_0$ et $k_1$, bornes incluses.

**2 - Filtrage**

L'étape de filtrage est similaire à ce qui est effectué dans la variante 1 (figure 4).
Le procédé calcule les réponses impulsionnelles corrigées (lissées / filtrées) $h'_{0,\,0...L-1}$ et $h'_{1,0...L-1}$ par les relations simples suivantes:

$$h_{0,i} = \sum_{k=k_0}^{k=k_1} a_{k-k_0} \, h_{k,i} = \sum_{m=0}^{m=k_1-k_0} a_m \, h_{m+k_0,i} \qquad i = 0...L-1 \qquad (8)$$

$$h_{1,i} = \sum_{k=k_0}^{k=k_1} b_{k-k_0} \, h_{k,i} = \sum_{m=0}^{m=k_1-k_0} b_m \, h_{m+k_0,i} \qquad i = 0...L-1 \qquad (9)$$

Comme dans la variante 1, les coefficients $a_i$ et $b_i$ dépendent de $k_0$, $k_1$, du rapport signal/bruit de fonctionnement et de l'étalement Doppler supposé du canal de transmission.

Selon une variante de réalisation de l'invention, le procédé utilise pour le filtrage des filtres à coefficients optimisés.

Les interpolateurs ont pour objet d'estimer à partir des probes vraies situées aux positions $k_0...k_1$ (par rapport à la trame courante) les deux probes ou les deux réponses impulsionnelles avant et après à utiliser pour la trame courante.

Le critère retenu consiste à minimiser l'erreur quadratique moyenne d'interpolation pour une rotation maximale donnée de la réponse impulsionnelle entre probes et à un rapport signal/bruit donné (qui dépend des spécifications).

De plus, le procédé requiert par exemple que l'interpolation soit parfaite en l'absence de bruit pour une rotation de phase nulle, ce qui permet un niveau de performances maximal sur canal à variations lentes. L'expérience montre que cette contrainte a un effet minime sur le bruit d'interpolation lorsque le nombre M de coefficients des interpolations est pair. Chaque interpolateur a M coefficients réels $a_{0...M-1}$ où M vaut $k_1 - k_0 + 1$.

Le procédé cherche à minimiser l'erreur quadratique moyenne :

- pour une puissance de bruit $\beta$ donnée (i.e. à un rapport S/B bien défini),
- à une position x valant soit 0 soit 1, sachant que la position 0 correspond à la probe avant le bloc de données à traiter et concerne les $a_i$, et la position 1 à la probe après le bloc de données à traiter(on remplacera alors les $a_i$ par les $b_i$)
- en utilisant le signal aux positions $k_0$, ..., 0, 1, ... $k_1 = k_0 + M - 1$
- sachant que la rotation de phase entre deux positions vaut au plus A en valeur absolue ($A < \pi$)
- avec la contrainte que l'interpolation soit parfaite pour une rotation de phase nulle (interpolation parfaite du continu)

La puissance de bruit vaut

$$B = \beta \sum_{i=0}^{M-1} a_i^2 \qquad (10)$$

L'erreur d'interpolation, pour une rotation $\theta$ vaut :

$$E(\theta) = \left| \sum_{i=0}^{M-1} a_i \, e^{j\,\theta\,(k_0+i)} - e^{j\,x\,\theta} \right|^2 \qquad (11)$$

L'erreur quadratique moyenne est alors (12) :

$$EQM = \frac{1}{2A} \int_{-A}^{+A} E(\theta)\, d\theta + B$$

et sa (demi-)dérivée par rapport à $a_m$ ($m = 0...M - 1$):

$$\frac{1}{2}\frac{\delta EQM}{\delta a_m} = \frac{1}{2A} \int_{-A}^{+A} e^{-j\theta(k_0 + m)}\left(\sum_{i=0}^{M-1} a_i e^{j\theta(k_0 + i)} - e^{jx\theta}\right) d\theta + \beta a_m$$

$$(13)$$

soit :

$$\frac{1}{2}\frac{\delta EQM}{\delta a_m} = \frac{1}{2A}\left(\sum_{i=0}^{M-1} a_i \int_{-A}^{+A} e^{j\theta(i-m)} d\theta - \int_{-A}^{+A} e^{j\theta(x-k_0-m)} d\theta\right) + \beta a_m$$

ou encore :

$$\frac{1}{2}\frac{\delta EQM}{\delta a_m} = \sum_{i=0}^{M-1} a_i \frac{\sin((i-m)A)}{(i-m)A} - \frac{\sin((x-k_0-m)A)}{(x-k_0-m)A} + \beta a_m$$

La contrainte C est donnée par :

$$C = \sum_{i=0}^{M-1} a_i - 1 \qquad (14)$$

La minimisation avec contrainte consistera à minimiser la quantité EQM + $\lambda$ C avec l'équation supplémentaire C = 0.

Le système d'équations final à résoudre sera donc de dimension M + 1 avec M + 1 inconnues, à savoir $\lambda$ (non utilisé) et $a_{0...M-1}$ (qu'il faut remplacer par $b_{0...M-1}$ si x = 1):

-    M équations de minimisation :

$$\sum_{i=0}^{M-1} a_i \frac{\sin((i-m)A)}{(i-m)A} + \beta a_m + \lambda = \frac{\sin((x-k_0-m)A)}{(x-k_0-m)A}$$

$$m = 0...M - 1$$

-    et pour la contrainte :

$$\sum_{i=0}^{M-1} a_i = 1$$

Un exemple de solution est le suivant (15) :

- faire la somme des K premières équation et en déduire λ sachant que la somme des a; vaut 1 :

$$\lambda = \frac{1}{M}\left[\sum_{j=0}^{M-1} \frac{\sin[(x - k_0 - j)A]}{(x - k_0 - j)A} - \sum_{i=0}^{M-1} a_i \sum_{j=0}^{M-1} \frac{\sin[(i - j)A]}{(i - j)A} - \beta\right]$$

- modifier les M premières équations :

$$\sum_{i=0}^{M-1} a_i\left[M \frac{\sin[(i - m)A]}{(i - m)A} - \sum_{j=0}^{M-1} \frac{\sin[(i - j)A]}{(i - j)A}\right] + M \beta a_m$$

$$= \beta + M \frac{\sin[(x - k_0 - m)A]}{(x - k_0 - m)A} - \sum_{j=0}^{M-1} \frac{\sin[(x - k_0 - j)A]}{(x - k_0 - j)A}$$

$$m = 0...M - 1$$

- résoudre le système de M équations modifiées.

Les interpolateurs peuvent par exemple être calculés une fois pour toutes et stockés en mémoire morte.

De plus, pour pouvoir s'adapter à différents canaux, plus ou moins stables (un canal stable correspond à une rotation maximale A faible), on calcule des jeux d'interpolateurs correspondant à différentes valeurs de rotation A.

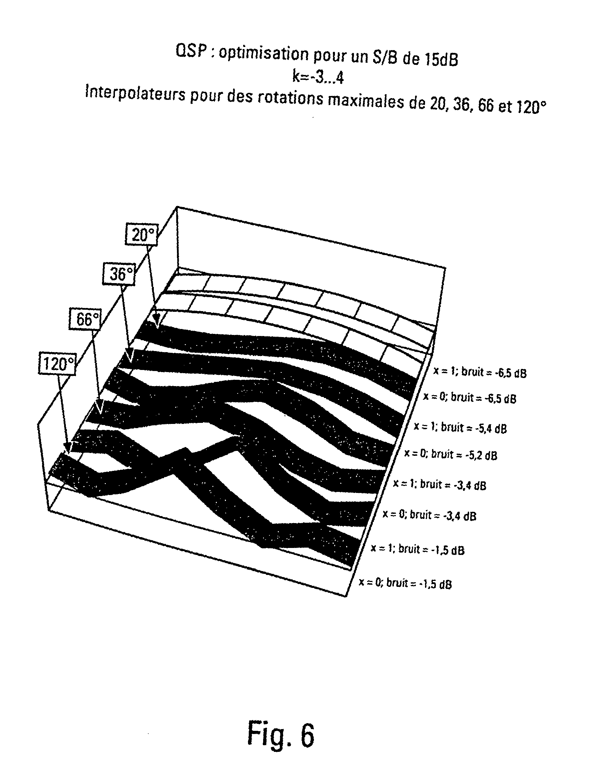

La figure 6 représente un exemple de coefficients des filtres dans le cas symétrique pour M = 8 prises ($k_0$ = -3 et $k_1$ = +4), et des valeurs de rotation A en progression (quasi) géométrique : A = $A_0$...$A_3$ = 20°, 36°, 66° et 120°.

Les valeurs en dB donnent l'effet de réduction de bruit obtenu, à savoir le rapport entre le S/B de l'estimation directe et le S/B de l'estimation lissée : cette réduction de bruit est naturellement d'autant plus faible que la largeur de bande de l'interpolateur (exprimée par la valeur de A) est plus élevée.

Elle est maximale lorsque A est faible : ici, pour A = 20°, elle est de 6.5 dB, ce qui signifie que le rapport S/B des réponses impulsionnelles estimées est 6.5 dB meilleur que ce qu'il aurait été sans le lissage proposé, et se rapproche donc d'une estimation idéale du canal.

Pour la partie "filtrage" de l'amélioration proposée, et sauf en régime permanent, lorsque la réception vient de se terminer, il n'y a plus de signal à l'entrée du récepteur et il faut alors la terminer avec le signal restant disponible.

A titre d'exemple, dans le STANAG 4539, la communication est structurée en super-trames comportant 72 blocs de données et les 73 probes associées, et elle peut s'interrompre à chaque super-trame.

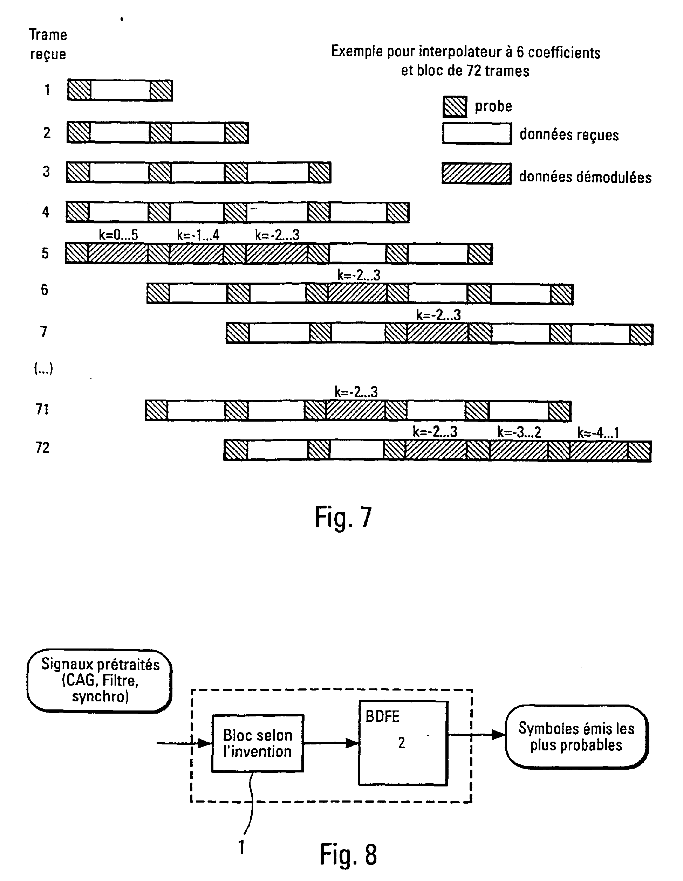

La figure 7 représente un exemple d'interpolateur à 6 coefficients et bloc de 72 trames, permettant de prendre en compte les effets de bord. LE nombre M de probes utilisées à chaque fois est de 6 dans cet exemple de réalisation. Lors de la réception des trames 1 à 4, aucune démodulation n'est effectuée.

Après réception de (la probe après) la trame 5, le procédé démodule les trames 1 à 3 en utilisant les 6 probes disponibles (d'avant la trame 1 jusqu'après la trame 5) avec $k_0$ = 0...-2 et $k_1 = k_0 + 5$.

Après réception de (la probe après) les trames t = 6...71, le procédé démodule les trames t = 4... 69 en utilisant les 6 probes qui les encadrent (3 avant, 3 après), avec $k_0$ = -2 et $k_1$ = 3.

Enfin, après réception de (la probe après) la trame 72, on démodule les trame 70 à 72 en utilisant les 6 dernières probes reçues avec $k_0$ = -2...-4 et $k_1 = k_0 + 5$.

On remarque qu'au début de la super-trame ainsi qu'à sa fin, les trames disponibles avant et après la trame en cours ne sont pas en même nombre, ce qui se traduit par des jeux non constants de valeurs ($k_0$, $k_1$) : on doit donc disposer au total, pour des interpolateurs comportant M prises, de M - 1 jeux de coefficients, dont un symétrique (celui utilisé le plus souvent si la super-trame comprend un nombre important de trames) et les autres dissymétriques, mais se correspondant deux à deux.

Ceci peut bien évidemment se généraliser à un nombre quelconque M de probes utilisées pour le filtrage, ce nombre étant de préférence pair, à la fois pour des raisons de simplicité (symétrie des coefficients des filtres) et parce qu'ainsi la contrainte qui veut qu'un canal stable soit parfaitement interpolé a relativement peu d'influence sur le gain en rapport signal/bruit (l'erreur d'interpolation présente un minimum "naturel" pour une rotation de phase nulle).

Selon une variante de réalisation, le procédé permet aussi de sélectionner les jeux de coefficients utilisés pour l'étape de filtrage ou de lissage.

Différentes possibilités de choix de jeux de coefficients existent dont deux sont données à titre illustratif et nullement limitatif.

### Critère rigoureux

Le critère le plus rigoureux est celui qui donne le rapport signal / bruit estimé pour la trame après l'exécution de l'algorithme BDFE qui, rappelons le, a pour but de déterminer les valeurs les plus probables pour les symboles émis compte tenu du signal reçu et de la réponse impulsionnelle du canal estimée par les moyens exposés précédemment.

Pour schématiser, la phase finale du BDFE procède en N étapes (N est le nombre de symboles inconnus émis pour la trame en cours de démodulation).

- A l'étape n (n = 0... N - 1), on dispose des valeurs estimées $\hat{e}_0$, $\hat{e}_1$, $\hat{e}_2$, ..., $\hat{e}_{n-1}$ des symboles émis.
- On soustrait alors du signal reçu $r_n$ l'influence des symboles émis précédents, compte tenu de la réponse impulsionnelle du canal, pour obtenir une valeur corrigée $r'_n$.
- On détermine alors dans la "constellation" courante le point qui est le plus proche de $r'_n$ (opération de décision) qui devient la valeur (complexe) la plus probable du $n^{ème}$ symbole émis $\hat{e}_n$.

La différence entre $r'_n$ et $\hat{e}_n$ est due au bruit (d'une manière générale, bruit incluant l'erreur d'estimation des réponses impulsionnelles) et l'on peut prendre comme critère de choix le rapport signal/bruit estimé pour la trame comme étant le rapport entre la puissance moyenne du signal (les $e_n$) et la puissance moyenne du bruit (espérance mathématique du carré du module de la différence avant décision) :

$$S/B_{est} = \frac{\langle |e_n|^2 \rangle}{\frac{1}{N} \sum_{n=0}^{N-1} |r'_n - \widehat{e_n}|^2} \qquad (16)$$

### Critère approché

Il peut être souhaitable, mais ce au prix d'une légère dégradation des performances, de n'utiliser qu'une valeur approchée de ce rapport signal/bruit ou d'une quantité qui en serait une fonction monotone croissante par exemple. Ceci permet de limiter la puissance de calcul nécessaire car on n'est pas obligé d'exécuter l'algorithme BDFE pour estimer le rapport S/B.

Le raisonnement est le suivant, et il néglige l'influence du procédé de décision (qui ramène $r'_n$ sur $\hat{e}_n$), ce qui explique pourquoi ses performances sont moins bonnes.

Les symboles émis, filtrés par $h_{0...L-1}$, donnent en principe les symboles reçus

$$\forall n, r_n = \sum_{j=0}^{j=L-1} e_{n-j} h_j \qquad (17)$$

En ajoutant un bruit $x_n$ au signal reçu, cela équivaut à ajouter un bruit (fictif) $y_{n-j}$ au signal émis :

$$\forall n, \, r_n + x_n = \sum_{j=0}^{j=L-1} |e_{n-j} + y_{n-j}| h_j \qquad (18)$$

Si les $y_{n-j}$ ont une puissance moyenne $y^2$, la puissance moyenne des $x_n$, notée $x^2$, sera :

$$x^2 = y^2 \sum_{j=0}^{j=L-1} |h_j|^2 \qquad (19)$$

ou, inversement:

$$y^2 = \frac{x^2}{\sum_{j=0}^{j=L-1} |h_j|^2} \qquad (20)$$

Dans le BDFE, et en négligeant les effets de bord, on peut dire que les $e_i$ (symboles émis) sont obtenus à partir des symboles reçus par le "filtre inverse" de h et donc que, localement, si le bruit sur le signal reçu a une puissance $\beta$, le bruit (sans décision) sur les e; au voisinage d'une position n peut être approximé par :

$$y_n^2 = \frac{\beta}{\sum_{j=0}^{j=L-1} |h_j^{(n)}|^2} \qquad (21)$$

Dans le BDFE avec interpolation linéaire, la réponse impulsionnelle du canal est supposée varier linéairement entre une réponse initiale $h_0$ et une réponse finale $h_1$, si bien que l'on peut estimer une erreur moyenne sur les $e_i$ de la façon suivante :

$$\overline{y^2} = \beta \int_{x=0}^{x=1} \frac{dx}{\sum_{j=0}^{j=L-1} |h_j^0 + x\, |h_j^1 - h_j^0|^2} \qquad (22)$$

La valeur de cette intégrale est la suivante :

$$\overline{y^2} = 2\,\beta \, \frac{\arctan\left(\frac{\sqrt{4\, h_{00}\, h_{11} - h_{01}^2}}{h_{01}}\right)}{\sqrt{4\, h_{00}\, h_{11} - h_{01}^2}} \qquad (23)$$

avec

$$h_{00} = \sum_{j=0}^{j=L-1} \left| h_j^0 \right|^2$$

$$h_{11} = \sum_{j=0}^{j=L-1} \left| h_j^1 \right|^2$$

$$h_{01} = \sum_{j=0}^{j=L-1} \left| h_j^0 h_j^{1*} + h_j^{0*} h_j^1 \right|$$

En considérant une réponse impulsionnelle moyenne $h^c$ (au centre) et une variation $dh^c$ entre le centre et les extrémités, on obtient (24) :

$$h_j^c = \frac{h_j^0 + h_j^1}{2}$$

$$dh_j^c = \frac{h_j^1 - h_j^0}{2}$$

$$H = \sum_{j=0}^{j=L-1} \left| h_j^c \right|^2$$

$$\Delta = \sum_{j=0}^{j=L-1} \left| dh_j^c \right|^2$$

$$R = \mathrm{Re} \left( \sum_{j=0}^{j=L-1} h_j^c \, dh_j^{c*} \right)$$

$$\overline{y^2} = \beta \, \frac{\arctan\left( 2 \frac{\sqrt{H \Delta - R^2}}{H - \Delta} \right)}{2 \sqrt{H \Delta - R^2}}$$

soit, si la différence entre $h_0$ et $h_1$ n'est pas trop élevée, ce qui correspond à un étalement Doppler (ou à un décalage Doppler non compensé) raisonnable (25) :

$$\overline{y^2} \approx \frac{\beta}{H - \Delta}$$

En résumé, le critère simplifié (proportionnel au rapport S/B théorique du signal avant décision) peut être exprimé par (26) :

$$S/B_{\text{est simp.}} \approx \frac{1}{\displaystyle\sum_{j=0}^{j=L-1} |h_{1,j} + h_{0,j}|^2 - \sum_{j=0}^{j=L-1} |h_{1,j} - h_{0,j}|^2}$$

soit, sous forme encore plus simple (27) :

$$S/B_{\text{est simp.}} \approx \frac{1}{\displaystyle\sum_{j=0}^{j=L-1} h_{0,j} h_{1,j}^* + h_{0,j}^* h_{1,j}}$$

## Exemple de logique de choix

Le choix du jeu d'interpolateurs courant sera fait par exemple chaque fois qu'un nombre donné de trames a été traité.

L'algorithme proposé tient compte du fait que, d'une trame (bloc de données) à l'autre, les propriétés statistiques du canal varient peu et que l'on a rangé les jeux d'interpolateurs de telle sorte que deux jeux voisins soient optimisés pour des étalements Doppler voisins.

Si à la trame précédente, l'interpolateur correspondant à $A_p$ a été choisi (p = 0...3 dans cet exemple), la démodulation se fera avec les interpolateurs correspondant à $A_{p-1}$ (si possible), $A_p$, et $A_{p+1}$ (si possible) et c'est celui donnant le meilleur résultats qui servira de point de départ à la trame suivante.

La figure 8 schématise une structure d'un dispositif selon l'invention. Le ou les signaux préconditionnés après passage dans un ensemble de dispositifs habituellement utilisés et comportant des filtres adaptés, un CAG (contrôle automatique de gain, ...) et tous les dispositifs permettant le préconditionnement est transmis par exemple à un microprocesseur 1 pourvu d'un logiciel conçu pour exécuter les différentes étapes mentionnées ci-dessus. Les résultats obtenus sont ensuite transmis à un algorithme BDFE 2 permettant d'obtenir les symboles émis les plus probables, selon une méthode connue de l'Homme du métier.

## Revendications

1. Procédé d'égalisation d'un signal reçu par un récepteur après traversée d'un canal de transmission, ledit signal comportant au moins un bloc de données et plusieurs probes situés de part et d'autre du bloc de données **caractérisé en ce qu'**il comporte une étape où pour chaque probe disposée avant le bloc de données et pour chaque probe disposée après le bloc de données, estimer la réponse impulsionnelle du canal respectivement $h_0(t)$ et $h_1(t)$, avant et après un bloc de données n à traiter en considérant les probes situées de part et d'autre du bloc de données n respectivement (probe n-1, probe n), mais aussi les probes précédentes et suivantes de la probe n-1 et de la probe n, à savoir $h_{k0}(t)$ $h_{k0+1}(t)$ ... $h_0(t)$ $h_1(t)$ ... $h_{k1-1}(t)$ $h_{k1}(t)$, avec $k_0$ inférieur ou égal à 0 et $k_1$ supérieur ou égal à 1, lesdites probes étant combinées chacun avec un jeu de poids notés respectivement $a_{0...k1-k0}$ pour obtenir $h_0(t)$ et $b_{0...k1-k0}$ pour obtenir $h_1(t)$.

2. Procédé selon la revendication 1 **caractérisé en ce qu'**il comporte au moins les étapes suivantes : pour chaque probe disposée avant le bloc de données à traiter et pour chaque probe située après le bloc de données à traiter, on remplace chacune des probes par des probes lissées et on détermine ensuite une estimée de la réponse impulsionnelle $h_0$ avant le bloc de données et une estimée de la réponse impulsionnelle $h_1$ après le bloc de données.

3. Procédé selon l'une des revendications 1 à 2 **caractérisé en ce que** l'estimation est effectuée en minimisant l'erreur quadratique totale donnée par

$$E = \sum_{n=N_0}^{N_1} \left| \sum_{m=0}^{L-1} d_{n-m} h_m - r_n \right|^2$$

avec
$d_{n-m}$ = signal émis connu
$h_m$ = échantillon de la réponse impulsionnelle
$_m$ = signal reçu.
$r_n$ = probe à traiter

**4.** Procédé selon l'une des revendications 1 à 3 **caractérisé en ce qu'**il comporte une étape où les coefficients utilisés pour le lissage des probes sont obtenus en minimisant l'erreur quadratique de l'erreur d'interpolation

$$E(\theta) = \left| \sum_{i=0}^{M-1} a_i e^{j\,\theta\,|k_0+i|} - e^{j\,x\,\theta} \right|^2$$

où $\theta$ est la rotation de phase, comprise entre deux valeurs extrêmes -A et +A qui dépendent de la vitesse de variation de la fonction de transfert du canal.

**5.** Procédé selon l'une des revendications 1 à 4 où l'on dispose de plusieurs jeux de coefficients d'interpolation, chaque jeu étant optimisé pour des conditions de réception bien précises où l'on essaie, à intervalles réguliers, des jeux voisins de celui en cours d'utilisation et où l'on retient pour la suite celui qui maximise un rapport signal/bruit de démodulation pouvant être estimé de diverses façons.

**6.** Procédé selon l'une des revendications 1 à 5 **caractérisé en ce qu'**il comporte une étape de démodulation de signaux reçus dans un BDFE.

**7.** Dispositif pour égaliser au moins un signal ayant traversé un canal de transmission, ledit signal comportant au moins un bloc de données et plusieurs probes situés de part et d'autre du bloc de données **caractérisé en ce qu'**il comporte au moins un moyen recevant les signaux et adapté à estimer, pour chaque probe disposée avant le bloc de données et pour chaque probe disposée après le bloc de données, la réponse impulsionnelle du canal respectivement $h_0(t)$ et $h_1(t)$, avant et après un bloc de données n à traiter en considérant les probes situées de part et d'autre du bloc de données n, mais aussi les probes précédentes et suivantes, à savoir les réponses impulsionnelles $h_{k0}(t)$ $h_{k0+1}$ (t) ... $h_0(t)$ $h_1(t)$ ... $h_{k1-1}(t)$ $h_{k1}(t)$, avec $k_0$ inférieur ou égal à 0 et $k_1$ supérieur ou égal à 1, combinées chacun avec un jeu de poids notés respectivement $a_{0...k1-k0}$ pour obtenir $h_0(t)$ et $b_{0...k1-k0}$ pour obtenir $h_1(t)$, lesdites probes étant pondérées et combinées entre elles et au moins un dispositif de type BDFE.

**Claims**

**1.** Method for the equalization of a signal received by a receiver after it has traveled through a transmission channel, said signal comprising at least one data block and several probes located on either side of the data block, **characterized in that** the method comprises a step in which, for each probe positioned before the data block and for each probe located after the data block, the impulse response of the channel $h_0(t)$ and $h_1(t)$ respectively is estimated before and after a data block n to be processed in taking account of the probes located on either side of the data block n respectively (probe n-1, probe n) and also of the probes that precede and follow the probe n-1 and probe n, namely $h_{k0}(t)$ $h_{k0+1}(t)$ ... $h_0(t)$ $h_1(t)$ ... $h_{k1-1}(t)$ $h_{k1}(t)$, with $k_0$ being less than or equal to 0 and $k_1$ being greater than or equal to 1, said probes each being combined with a set of weights denoted respectively $a_{0...k1-k0}$ to obtain $h_0(t)$ and $b_{0...k1-k0}$ to obtain $h_1(t)$.

**2.** Method according to Claim 1 **characterized in that** it comprises at least the following steps: for each probe positioned before the data block to be processed and for each probe located after the data block to be processed, each of the probes is replaced by smoothed probes and then the impulse response $h_0$ before the data block and the impulse

response $h_1$ after the data block are estimated.

3. Method according to one of Claims 1 to 2 **characterized in that** the estimation is made by minimizing the total square error given by:

$$E = \sum_{n=N_0}^{N_1} \left| \sum_{m=0}^{L-1} d_{n-m} h_m - r_n \right|^2$$

with

$d_{n-m}$ = known signal sent
$h_m$ = sample of the impulse response
$_m$ = received signal
$r_n$ = probe to be processed.

4. Method according to one of Claims 1 to 3 **characterized in that** it comprises a step in which the coefficients used for the smoothing of the probes are obtained by minimizing the square error of the interpolation error

$$E(\theta) = \left| \sum_{i=0}^{M-1} a_i e^{j\theta(k_0+i)} - e^{jx\theta} \right|^2$$

where $\theta$ is the phase rotation, included between two extreme values -A and +A that depend on the speed of variation of the transfer function of the channel.

5. Method according to one of Claims 1 to 4 in which there are several sets of interpolation coefficients available, each set being optimized for very precise conditions of reception where, at regular intervals, sets that are neighbors of the one being used are tried and where, for the subsequent part of the operation, the set chosen is the one that maximizes a demodulation signal-to-noise ratio that can be estimated in various ways.

6. Method according to one of Claims 1 to 5, **characterized in that** it comprises a step of demodulation of signals received in a BDFE.

7. Device used to equalize at least one signal having traveled through a transmission channel, said signal comprising at least one data block and several probes located on either side of the data block, **characterized in that** the device comprises at least one means receiving the signals and adapted to estimating, for each probe positioned before the data block and for each probe positioned after the data block, the impulse response of the channel $h_0(t)$ and $h_1$ (t) respectively before and after a data block n to be processed in taking account of the probes located on either side of the data block n and also of the probes that precede and follow, namely the impulse responses $h_{k0}(t)$ $h_{k0+1}$ (t) ... $h_0(t)$ $h_1(t)$ ... $h_{k1-1}(t)$ $h_{k1}(t)$, with $k_0$ being less than or equal to 0 and $k_1$ being greater than or equal to 1, each combined with a set of weights denoted respectively $a_{0...k1-k0}$ to obtain $h_0(t)$ and $b_{0...k1-k0}$ to obtain $h_1(t)$, said probes being weighted and combined with one another and at least one BDFE type device.

**Patentansprüche**

1. Verfahren zum Entzerren eines von einem Empfänger nach Durchquerung eines Übertragungskanals empfangenen Signals, wobei das Signal mindestens einen Datenblock und mehrere Proben aufweist, die sich zu beiden Seiten des Datenblocks befinden, **dadurch gekennzeichnet, dass** es einen Schritt aufweist, in dem für jede vor dem Datenblock angeordnete Probe und für jede nach dem Datenblock angeordnete Probe die Impulsantwort des Kanals $h_0(t)$ bzw. $h_1(t)$ vor und nach einem zu verarbeitenden Datenblock n geschätzt wird, indem die zu beiden Seiten des Datenblocks n befindlichen Proben (Probe n-1, Probe n), aber auch die vor der Probe n-1 und der Probe n liegenden und die auf sie folgenden Proben berücksichtigt werden, nämlich $h_{k0}(t)$ $h_{k0+1}(t)$ ... $h_0(t)$ $h_1(t)$ ... $h_{k1-1}(t)$ $h_{k1}(t)$, mit $k_0$ kleiner als oder gleich 0 und $k_1$ größer als oder gleich 1, wobei die Proben je mit einem Satz von Gewichtungen kombiniert sind, die mit $a_{0...k1-k0}$ für den Erhalt von $h_0(t)$ und mit $b_{0...k1-k0}$ für den Erhalt von $h_1(t)$ bezeichnet sind.

2.  Verfahren nach Anspruch 1, **dadurch gekennzeichnet, dass** es mindestens die folgenden Schritte aufweist: für jede vor dem zu verarbeitenden Datenblock angeordnete Probe und für jede nach dem zu verarbeitenden Datenblock angeordnete Probe wird jede der Proben durch geglättete Proben ersetzt, und anschließend wird ein Schätzwert der Impulsantwort $h_0$ vor dem Datenblock und ein Schätzwert der Impulsantwort $h_1$ nach dem Datenblock bestimmt.

3.  Verfahren nach einem der Ansprüche 1 bis 2, **dadurch gekennzeichnet, dass** die Schätzung durchgeführt wird, indem der gesamte quadratische Fehler minimiert wird, der gegeben wird durch

$$E = \sum_{n=N_0}^{N_1} \left| \sum_{m=0}^{L-1} d_{n-m} h_m - r_n \right|^2$$

wobei bedeutet
$d_{n-m}$ = bekanntes gesendetes Signal
$h_m$ = Tastprobe der Impulsantwort
m = empfangenes Signal
$r_n$ = zu verarbeitende Probe.

4.  Verfahren nach einem der Ansprüche 1 bis 3, **dadurch gekennzeichnet, dass** es einen Schritt aufweist, in dem die für das Glätten der Proben verwendeten Koeffizienten erhalten werden, indem der quadratische Fehler des Interpolationsfehlers minimiert wird

$$E(\theta) = \left| \sum_{i=0}^{M-1} a_i e^{j\theta[k_0+i]} - e^{jx\theta} \right|^2$$

wobei $\theta$ die Phasendrehung ist, die zwischen zwei Endwerten -A und +A liegt, die von der Änderungsgeschwindigkeit der Transferfunktion des Kanals abhängen.

5.  Verfahren nach einem der Ansprüche 1 bis 4, bei dem man über mehrere Sätze von Interpolationskoeffizienten verfügt, wobei jeder Satz für ganz präzise Empfangsbedingungen optimiert ist, wobei in regelmäßigen Abständen Sätze getestet werden, die dem in Benutzung befindlichen benachbart sind, und wobei für die Fortsetzung derjenige behalten wird, der ein Demodulations-Signal/Rausch-Verhältnis maximiert, das auf verschiedene Weisen geschätzt werden kann.

6.  Verfahren nach einem der Ansprüche 1 bis 5, **dadurch gekennzeichnet, dass** es einen Schritt der Demodulation von empfangenen Signalen in einem BDFE aufweist.

7.  Vorrichtung zum Entzerren mindestens eines Signals, das einen Übertragungskanal durchquert hat, wobei das Signal mindestens einen Datenblock und mehrere Proben aufweist, die sich zu beiden Seiten des Datenblocks befinden, **dadurch gekennzeichnet, dass** sie mindestens eine Einrichtung, die die Signale empfängt und geeignet ist, für jede vor dem Datenblock angeordnete Probe und für jede nach dem Datenblock angeordnete Probe die Impulsantwort des Kanals $h_0(t)$ bzw. $h_1(t)$ vor und nach einem zu verarbeitenden Datenblock n zu schätzen, indem die zu beiden Seiten des Datenblocks n befindlichen Proben, aber auch die vorhergehenden und die folgenden Proben berücksichtigt werden, nämlich die Impulsantworten $h_{k0}(t)$ $h_{k0+1}(t)$ ... $h_0(t)$ $h_1(t)$ ... $h_{k1-1}(t)$ $h_{k1}(t)$, mit $k_0$ kleiner

als oder gleich 0 und $k_1$ größer als oder gleich 1, je kombiniert mit einem Satz von Gewichtungen, die mit $a_{0...k1-k0}$ für den Erhalt von $h_0(t)$ und mit $b_{0...k1-k0}$ für den Erhalt von $h_1(t)$ bezeichnet sind, wobei die Proben gewichtet und miteinander kombiniert werden, und mindestens eine Vorrichtung vom Typ BDFE aufweist.

Probe — Données libres — Probe — Données libres — Probe

n-1 — n — n — n+1 — n+1

## Fig. 1

probe avant
$P(n-1)$

données à démoduler
$N$

probe après
$P(n)$

$L$ — $L$ — $L$ — $L$

signal reçu
pour la probe
avant

signal reçu
pour la probe
après

données utilisées pour la démodulation
$N+L-1$

$h_0(t)$

$h_1(t)$

## Fig. 2

Probe avant les données

Données

Probe après les données

$n+k_0$ ... $n$ — à traiter — $n+1$ ... $n+k_1$

$h_0(t)$
brut

$h_1(t)$
brut

Combinaison linéaire et estimation par la méthode des moindres carrés

Choix des pondérations — $h_0(t)$ lissé — $h_1(t)$ lissé

## Fig. 3

Données
à traiter

Fig. 4

Données
à traiter

Fig. 5

QSP : optimisation pour un S/B de 15dB
k=-3...4
Interpolateurs pour des rotations maximales de 20, 36, 66 et 120°

Fig. 6

Trame
reçue

Exemple pour interpolateur à 6 coefficients
et bloc de 72 trames

1

2

3

4

probe

données reçues

données démodulées

k=0...5    k=-1...4    k=-2...3

5

k=-2...3

6

k=-2...3

7

(...)

k=-2...3

71

k=-2...3    k=-3...2    k=-4...1

72

## Fig. 7

Signaux prétraités
(CAG, Filtre,
synchro)

Bloc selon
l'invention

BDFE

2

Symboles émis les
plus probables

1

## Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0030274 A